# FASCICULE DE BREVET EUROPEEN

(11) **EP 1 976 636 B1**
(45) Date de publication et mention de la délivrance du brevet: **19.10.2011**
(21) Numéro de dépôt: 07730828.6
(22) Date de dépôt: 17.01.2007
(51) Int. Cl.: B01L 3/00, G01N 35/00

(54) **CUVETTE UNITAIRE POUR L'ANALYSE D'UN FLUIDE BIOLOGIQUE, ET DISPOSITIF AUTOMATIQUE D'ANALYSE IN VITRO**
EINHEITENKÜVETTE ZUR ANALYSE EINES BIOLOGISCHEN FLUIDS UND AUTOMATISCHE VORRICHTUNG ZUR IN-VITRO-ANALYSE
UNIT CUVETTE FOR ANALYSING A BIOLOGICAL FLUID, AUTOMATIC DEVICE FOR IN VITRO ANALYSIS

(30) Priorité: 25.01.2006 FR 0600670
(43) Date de publication de la demande: 08.10.2008
(73) Titulaire: ImmunoDiagnostic System France, 21320 Pouilly en Auxois (FR); Rousseau, Alain, 75004 Paris (FR)
(72) Inventeur: ROUSSEAU, Alain, F-75004 Paris (FR)
(74) Mandataire: Maureau, Philippe
(86) Numéro de dépôt international: PCT/FR2007/000084
(87) Numéro de publication internationale: WO 2007/085715

(56) Documents cités:
- EP-A- 0 325 874
- EP-A- 1 382 392
- WO-A-92/04978
- WO-A-99/64839
- WO-A2-2006/021648
- FR-A1- 2 873 447
- US-A- 4 785 407
- US-A- 5 350 564
- US-A- 6 106 781
- PATENT ABSTRACTS OF JAPAN vol. 008, no. 282 (P-323), 22 décembre 1984 (1984-12-22) -& JP 59 147267 A (OLYMPUS KOGAKU KOGYO KK), 23 août 1984 (1984-08-23)

## Description

La présente invention concerne une cuvette unitaire apte à contenir un fluide biologique pour l'analyse de celui-ci, et un dispositif automatique d'analyse in vitro comprenant de telles cuvettes.

On connaît du document EP 0 325 874 une cuvette permettant de déterminer le temps de coagulation du sang. A cet effet, le fond de la cuvette comprend un chemin de roulement curviligne dont la concavité est dirigée vers le haut, sur lequel une bille ferromagnétique est placée et entraînée dans un mouvement périodique sous l'effet d'un champ magnétique extérieur. La détection des variations de l'amplitude et/ou de la fréquence du mouvement de la bille permet de mesurer le temps de coagulation. Cette mesure est effectuée au moyen d'un densitomètre disposé de sorte que le faisceau lumineux qu'il produit est sensiblement tangent à la bille lorsque celle-ci est au point le plus bas du chemin de roulement. Les cuvettes peuvent être utilisées soit de façon isolée, soit en blocs de plusieurs cuvettes.

Ce type de cuvette, s'il donne généralement satisfaction, présente néanmoins un certain nombre d'inconvénients.

Tout d'abord, lorsque les cuvettes décrites dans le document EP 0 325 874 sont utilisées de façon isolée, il est difficile ou fastidieux de les stocker d'une manière ordonnée qui permette de gagner en encombrement sans qu'il soit délicat de séparer les cuvettes les unes des autres au moyen d'un automate. A l'inverse, lorsque plusieurs cuvettes sont formées d'un seul tenant en un bloc, le stockage est plus aisé, même s'il peut nécessiter un volume important. Mais la manipulation d'un tel bloc peut s'avérer malaisée dans certaines applications et, en tout état de cause, il est difficile voire impossible de réaliser des tests différents sur les cuvettes d'un même bloc, à moins de disposer d'un dispositif d'analyse très spécifique.

En outre, ces cuvettes sont uniquement destinées à la détermination du temps de coagulation du sang et, à cet effet, elles comportent toutes une bille. Il est bien entendu possible d'utiliser ces cuvettes pour effecteur d'autres analyses ou mesures sur le fluide biologique qu'elles contiennent, mais cela implique les inconvénients suivants :
- le coût d'une cuvette est augmenté inutilement du fait d'une part de la présence non nécessaire d'une bille et d'autre part de moyens prévus sur la cuvette pour empêcher la bille de sortir ;
- la présence d'une bille peut s'avérer gênante pour certains tests (notamment les tests d'immunologie utilisant des particules magnétiques) ;
- pour les mesures photométriques, il est nécessaire d'augmenter le volume réactionnel pour recouvrir la bille d'une hauteur suffisante afin de réaliser la mesure optique en échappant à la bille. Le coût du test est donc augmenté du fait des quantités non nécessaires de réactifs.

La présente invention vise à remédier aux inconvénients mentionnés ci-dessus.

A cet effet, et selon un premier aspect, l'invention concerne une cuvette unitaire apte à contenir un fluide biologique pour l'analyse de celui-ci, comprenant sensiblement en son fond des moyens définissant un chemin de roulement curviligne dont la concavité est dirigée vers le haut, ledit chemin présentant son point le plus bas sensiblement en son centre et étant agencé pour guider le mouvement oscillant d'une bille insérée dans la cuvette, caractérisée en ce qu'elle comporte des moyens d'accrochage dans une première direction à au moins une autre cuvette unitaire et des moyens d'accrochage dans une seconde direction, sensiblement perpendiculaire à la première, à au moins une autre cuvette unitaire.

Plusieurs cuvettes selon l'invention peuvent donc être assemblées les unes aux autres pour former des plaques qui sont très faciles à stocker, dans un encombrement réduit. De plus, il est très facile de détacher une cuvette unitaire d'une telle plaque, même de façon automatisée, ce qui rend ce type de cuvette d'emploi particulièrement aisé dans un dispositif automatique d'analyse in vitro.

Par ailleurs, ces cuvettes sont polyvalentes. En effet, elles comportent un chemin de roulement permettant la mesure du temps de coagulation du sang au moyen de la détection des mouvements d'une bille. Toutefois, la présence d'une bille est optionnelle, et la cuvette peut être utilisée pour tout type de tests, sans gêne due à la bille ou à la forme particulière du fond de la cuvette. La présence d'un point bas dans le fond de la cuvette, formé par le chemin de roulement, présente de plus l'avantage de permettre d'aspirer les liquides avec un volume mort très réduit et de faciliter le lavage des particules magnétiques.

L'invention fournit donc une cuvette particulièrement intéressante pour son utilisation dans un dispositif automatique d'analyse in vitro, puisqu'un seul et même type de cuvettes, stockées en plaque dans un unique magasin, peut permettre de conduire des tests variés selon les besoins (biochimie, immunochimie, coagulation).

Selon une réalisation possible, les moyens d'accrochage de la cuvette selon la première direction comportent au moins une languette dirigée vers le bas ménagée sur l'un des bords de la partie supérieure de la cuvette. En outre, une encoche peut être ménagée sur le bord de la partie supérieure de la cuvette opposé au bord comportant la languette, la languette d'une cuvette étant destinée à coopérer avec l'encoche d'une cuvette adjacente selon la première direction.

Les moyens d'accrochage de la cuvette selon la seconde direction comportent par exemple deux débords, dont l'un forme un crochet ouvert vers le haut et l'autre forme un crochet ouvert vers le bas, le crochet ouvert vers le haut de l'un des débords d'une cuvette étant susceptible de venir en prise avec le crochet ouvert vers le bas du débord d'une cuvette adjacente, les débords étant ménagés sur l'embase de la cuvette, le long de deux bords opposés et orthogonaux au bord supérieur de la cuvette comportant la languette.

Selon un deuxième aspect, l'invention concerne un dispositif automatique d'analyse in vitro, comprenant :
- un magasin d'alimentation dans lequel est stocké un ensemble de cuvettes unitaires telles que précédemment décrites ;
- un rotor d'axe sensiblement vertical, associé à des moyens d'entraînement en rotation et portant une couronne horizontale dentée délimitant des cavités ouvertes radialement vers l'extérieur aptes à recevoir les cuvettes unitaires, notamment depuis le magasin d'alimentation ;
- un dispositif d'introduction de fluide biologique à analyser dans au moins une cuvette ;
- des postes disposés autour de la couronne, pour la réalisation de mesures et/ou d'analyses du fluide contenu dans une cuvette, au moins l'un desdits postes comportant des moyens de déchargement/chargement des cuvettes pour la réalisation d'une mesure et/ou d'une analyse au niveau du poste, en dehors de la couronne ;
- un automate piloté par un logiciel embarqué gérant les séquences du processus souhaité pour chaque cuvette.

Grâce à ce dispositif automatique d'analyse et aux cuvettes utilisées, qui sont aptes à servir à différents types de tests utilisant des technologies de mesure différentes, il est possible de réaliser ces différents tests et de gérer leur conduite de façon améliorée par rapport à l'art antérieur. En effet, les processus de mesures longues (immunologie) ou qui nécessitent l'observation permanente du phénomène à mesurer (coagulation) peuvent être réalisés en dehors de la couronne, sur les postes correspondants, et ne constituent donc pas des goulots d'étranglement pour les tests à processus rapide (biochimie). Les cuvettes peuvent être stockées en plaques dans le magasin d'alimentation tout en étant facilement détachables les unes des autres, à la demande.

Le dispositif automatique d'analyse selon l'invention est polyvalent mais simple et peau coûteux à fabriquer, à maintenir. En outre, son coût d'exploitation est sensiblement plus bas que celui des automates de l'art antérieur, ce qui permet de réduire le nombre de machines par laboratoire, contribuant ainsi à la réduction des dépenses de santé publique.

Avantageusement, le dispositif comporte un poste de distribution de billes ferromagnétiques disposé à proximité de la couronne pour pouvoir insérer une bille dans une cuvette placée dans une cavité, et un poste de détermination du temps de modification de l'état physique du fluide biologique contenu dans ladite cuvette mettant en oeuvre un mouvement oscillant de la bille sur le chemin de roulement ménagé dans la cuvette.

Ainsi, parmi l'ensemble de cuvettes unitaires, identiques et polyvalentes stockées dans le magasin d'alimentation, l'une d'elles peut être amenée, via la couronne dentée, en regard du poste de distribution de billes, où elle reçoit une bille. La cuvette ainsi équipée est ensuite dirigée vers le poste de détermination du temps de modification de l'état physique du fluide biologique contenu dans ladite cuvette, par exemple le poste de détermination du temps de coagulation du sang. L'introduction d'une bille dans la cuvette s'effectue donc selon les besoins des tests à réaliser, et non de façon systématique, ce qui est avantageux notamment en termes de coût.

On décrit à présent, à titre d'exemple non limitatif, un mode de réalisation possible de l'invention, en référence aux figures annexées :
La figure 1 est une vue en perspective d'une cuvette selon l'invention ;
La figure 2 est une vue en coupe longitudinale de la cuvette ;
La figure 3 est une vue en coupe transversale de la cuvette ;
La figure 4 est une vue en perspective de trois cuvettes assemblées ;
La figure 5 est une vue en perspective d'un empilement de plaques de cuvettes et de la cinématique pour désolidariser les cuvettes les unes des autres ;
La figure 6 est une vue schématique en perspective du dispositif automatique d'analyse in vitro, montrant la couronne dentée et les différents postes disposés autour de cette couronne ;
La figure 7 est une vue en perspective d'une cuvette engagée dans une cavité de la couronne ; et
La figure 8 est une vue en perspective du magasin d'alimentation de cuvettes.

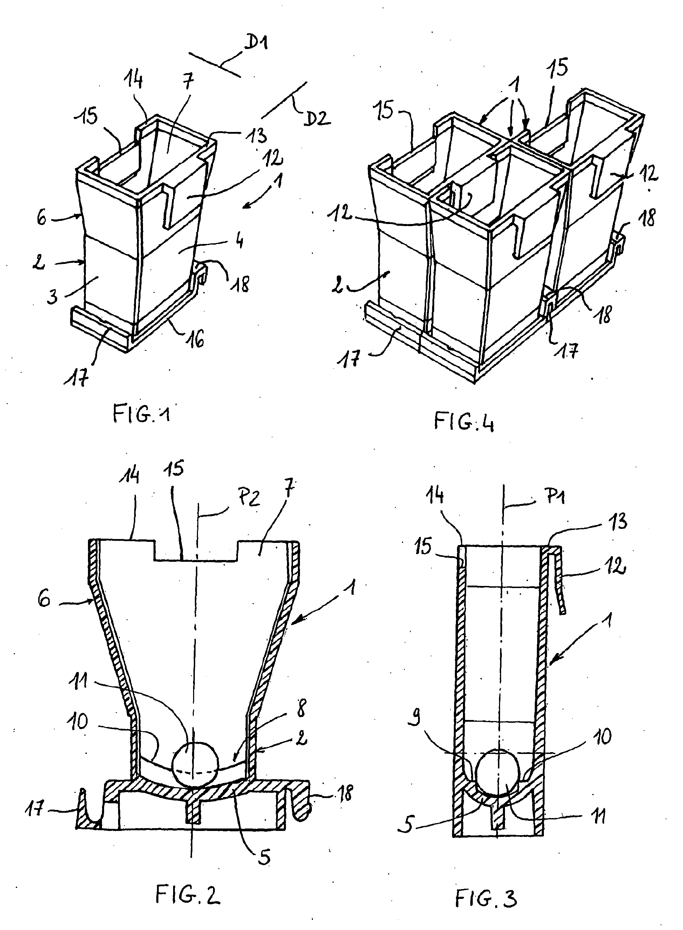

Comme illustré sur la figure 1, une cuvette 1 comporte une partie inférieure 2 de forme sensiblement parallélépipédique, comportant des grandes faces 3, des petites faces 4 et un fond 5. La partie inférieure 2 présente une longueur de l'ordre de 8 mm et une largeur de l'ordre de 4 mm. Ceci permet d'obtenir un mélange réactionnel minimum de 200 µl qui limite les consommations de réactifs, tout en conservant des chemins optiques suffisants pour les mesures spectrophotométriques et turbidimétriques (coagulation).

La partie inférieure 2 de la cuvette 1 est prolongée par une partie supérieure 6 en forme d'entonnoir s'évasant à l'opposé du fond 5, en tronc de cône ou en tronc de pyramide, et formant une ouverture supérieure 7. Ceci permet d'augmenter le volume de rinçage ou le volume réactionnel, de créer une ouverture large, et de faciliter le rinçage des nano particules pour les tests d'immunologie. Une cuvette 1 présentant une hauteur de l'ordre de 22 mm peut contenir jusqu'à 650 µl.

On définit la direction transversale D1 comme la direction orthogonale aux grandes faces 3 et la direction longitudinale D2 comme la direction orthogonale aux petites faces 4. On définit également le plan longitudinal médian P1 et le plan transversal médian P2 de la cuvette 1 (voir figures 2 et 3).

La description de la cuvette est effectuée dans une position où le fond 5 est sensiblement horizontal, et situé sous l'ouverture 7.

Le fond 5 de la cuvette 1 présente un point bas, situé à l'intersection des plans P1 et P2, ce qui permet d'évacuer par aspiration la quasi-totalité du liquide contenu dans la cuvette 1, avec un volume restant dans la cuvette très réduit. Dans l'exemple de réalisation, le fond 5 de la cuvette 1 est une portion de cylindre dont l'axe est sensiblement parallèle à D1.

Un chemin de roulement 8 curviligne, et dont la concavité est dirigée vers le haut, est ménagé sensiblement au fond de la cuvette 1. Le chemin de roulement 8 présente la forme d'une portion de cylindre, de rayon compris entre 8 et 10 mm et dont l'axe est ici sensiblement parallèle à D1 et contenu dans le plan P2. Le chemin de roulement 8 est donc allongé dans le sens longitudinal de la partie inférieure 2 de la cuvette 1, et présente son point le plus bas sensiblement en son centre. Le chemin de roulement 8 est défini par deux rails 9, 10 latéraux ménagés en partie inférieure de la cuvette 1, à proximité du fond 5. Ces deux rails 9, 10 permettent de guider le mouvement oscillant d'une bille 11 insérée dans la cuvette 1. Les dimensions de la bille 11 sont adaptées pour que celle-ci repose sur les rails 9, 10 mais non sur le fond 5, afin de limiter les frottements. La bille 11 présente par exemple un diamètre compris entre 1 et 2,5 mm.

La cuvette 1 et les rails 9, 10 sont réalisés d'une seule pièce par moulage d'une matière plastique transparente compatible avec les différentes réactions d'analyse du fluide biologique que la cuvette est apte à contenir. Un matériau adapté est le polypropylène mais tout autre matériau plastique, dont les caractéristiques de transparence pour la mesure de densité optique sont suffisantes et qui ne présente pas d'affinité trop importante avec les protéines, peut convenir.

La cuvette 1 présente, dans sa partie supérieure 6, une languette 12 flexible dirigée vers le bas, faisant saillie de l'un de ses bords supérieurs longitudinaux 13. Sur le bord longitudinal supérieur opposé 14, la cuvette 1 comporte une encoche 15 de dimensions adptées à celles de la languette 12. La languette 12 d'une cuvette 1 est destinée à venir coiffer l'encoche 15 d'une cuvette 1 adjacente (selon la direction D1), pour réaliser l'accrochage de deux cuvettes 1, comme montré à la figure 4.

En outre, la cuvette 1 comporte une embase 16 en partie inférieure, dans laquelle sont ménagés, le long de deux bords opposés parallèles à la direction D1, un premier débord 17 formant un crochet ouvert vers le haut et un deuxième débord 18 formant un crochet ouvert vers le bas. Le crochet ouvert vers le haut du premier débord 17 est adapté pour venir en prise avec le crochet ouvert vers le bas du deuxième débord 18 d'une cuvette 1 adjacente (selon la direction D2), pour réaliser l'accrochage de deux cuvettes 1, comme montré à la figure 4.

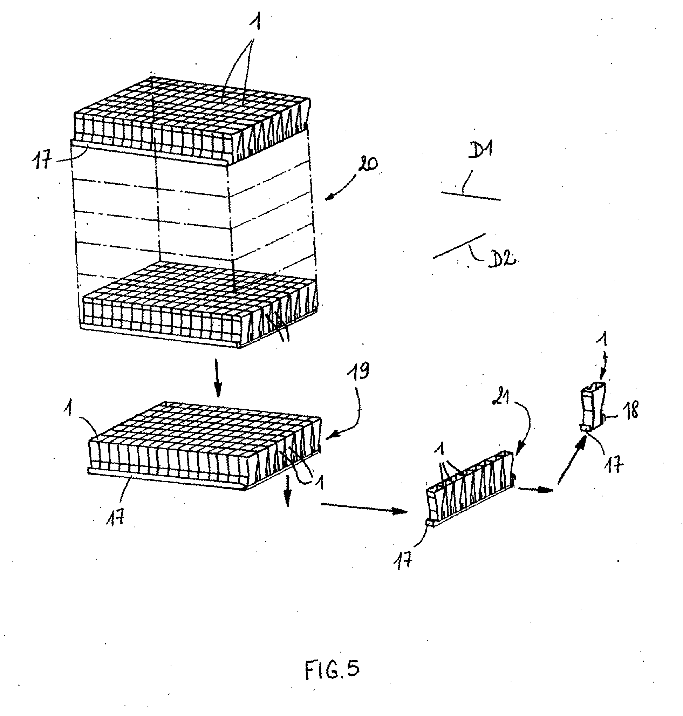

Grâce aux moyens d'accrochage dans les deux directions D1 et D2, il est possible d'accrocher des cuvettes 1 les unes aux autres, de façon manuelle ou automatique, pour former des plaques 19, comme illustré sur la figure 5. En outre, les débords 17, 18 permettent d'avoir des dimensions hors tout des cuvettes 1 qui soient les mêmes dans leurs parties supérieures 6 et dans leurs parties inférieures 2 de telle sorte qu'assemblées entre elles, les cuvettes 1 constituent une plaque plane. Ceci permet d'ordonner les cuvettes 1 pour les stocker de manière simple, compacte, tout en permettant de détacher aisément une cuvette 1 de la plaque 19.

La figure 5 représente une pile 20 de plaques 19 de cuvettes 1 superposées. On peut libérer la plaque inférieure par simple déplacement vertical de celle-ci par rapport aux autres plaques de la pile. Ensuite, il est possible de dégager une ligne 21, par déplacement vertical des cuvettes de cette ligne 21 par rapport aux autres cuvettes de la même plaque. Enfin, une cuvette 1 peut-être séparée des autres cuvettes de la même ligne 21, par un déplacement transversal.

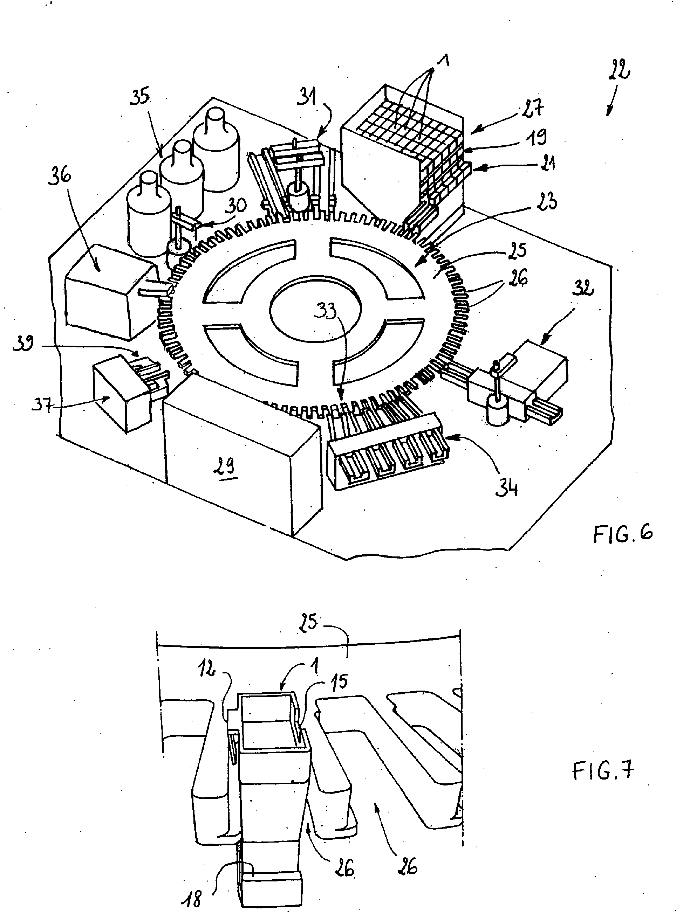

On se réfère à présent aux figures 6 à 8, qui illustrent un dispositif automatique d'analyse in vitro 22.

Le dispositif d'analyse 22 comprend une première partie (non représentée) de stockage et de prélèvement d'échantillons de fluide biologique et une seconde partie de mesure et d'analyse, illustrée sur la figure 6. Un dispositif de prélèvement et de pipetage des échantillons et des réactifs permet de déposer ceux-ci dans des cuvettes 1 disposées dans la seconde partie du dispositif d'analyse 22, en vue de la conduite de différents tests.

Le dispositif d'analyse 22 comprend un rotor 23 monté pivotant autour de son axe vertical 24, et entraîné par un moteur non représenté. Sur le rotor 23 est calée une couronne dentée 25 délimitant des cavités 26 débouchant radialement vers l'extérieur, dans lesquelles sont destinées à être insérées des cuvettes 1. A cet effet, et comme illustré sur la figure 7, la largeur d'une cavité 26 de la couronne dentée 25 est sensiblement égale à la largeur de la cuvette 1 à sa partie supérieure portant la languette 12. En conséquence, quand la cuvette 1 est engagée dans une cavité 26, la languette 12 est appliquée contre la paroi de la cavité 26 et immobilise la cuvette 1 par effet ressort de sorte que celle-ci ne se déplace pas lors des rotations du rotor 23, permettant ainsi des mesures optiques stables. La languette possède donc une double fonction d'accrochage de deux cuvettes 1 adjacentes et de maintien d'une cuvette 1 dans une cavité 26.

Autour de la couronne 25 sont disposés des postes, orientés radialement, permettant d'effectuer différentes mesures, tests ou analyses sur le fluide biologique contenu dans les cuvettes 1, ainsi qu'un magasin d'alimentation 27.

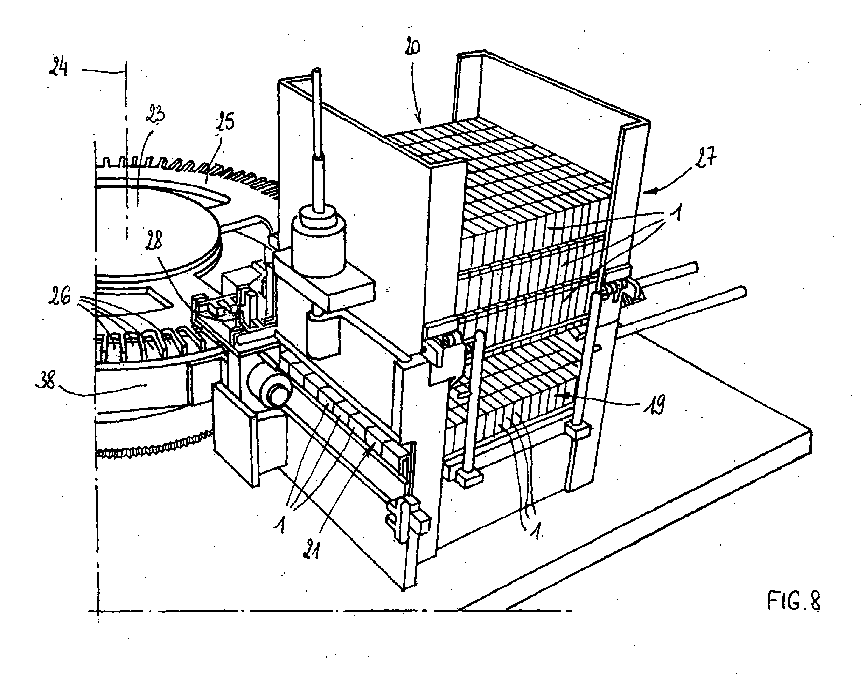

Comme illustré sur la figure 8, la magasin d'alimentation 27 comprend une pile 20 de plaques 19 de cuvettes 1 unitaires assemblées les unes aux autres grâce aux moyens d'accrochage. Une cuvette 1 peut être libérée selon la cinématique décrite en référence à la figure 5 : la plaque inférieure 19 tombe sur un support, puis est poussée vers la gauche (sur la figure 8), jusqu'à ce qu'une ligne 21 puisse être décalée vers le bas et se décrocher du reste de la plaque 19. Ensuite, la ligne 21 est poussée en direction de la couronne 25, après quoi la première cuvette 1 est dégagée transversalement des autres par un poussoir, qui l'emmène au droit d'un second poussoir 28 transversal au premier, pouvant pousser la cuvette 1 dans une cavité 6 de la couronne 25.

A titre d'exemple non limitatif, les postes disposés autour de la couronne 25 peuvent être :
- un poste 29 pour la mesure photométrique ;
- un poste 30 de distribution de nano particules magnétiques greffées avidines ou streptavidines, pour des réactions de captures immunologiques ;
- un poste 31 pour la sédimentation magnétique et le lavage ;
- un poste 32 pour la révélation et la lecture de la luminescence ;
- un poste 33 comprenant quatre stations de réalisation d'aliquote ou de dilution ;
- un poste 34 d'évacuation des cuvettes usagées vers un conteneur de déchets, le poste 34 étant ici disposé de sorte que les cuvettes à évacuer transitent par le poste 33 après être sorties de la couronne 25 ;
- un poste 35 pour les réactifs ancillaires, pour les particules magnétiques, pour la révélation de la luminescence, pour la décontamination et la désorption des protéines dans les tubulures du système de prélèvement ;
- un poste de distribution 36 de billes ferromagnétiques 11 ;
- un poste 37 de détermination du temps de modification de l'état physique du fluide biologique contenu dans la cuvette 1, mettant en oeuvre un mouvement oscillant de la bille 11 sur le chemin de roulement 8 ménagé dans la cuvette 1 ;
- un puits de rinçage et/ou de décontamination d'aiguilles de prélèvement et de distribution (non représenté).

La couronne 25 se déplace au-dessus d'un élément torique 38 possédant une section en U ouverte vers le haut (voir figure 8). Est ainsi délimité entre la couronne 25 et l'élément torique 38 un volume régulé en température, par exemple à 37°C, dans lequel les cuvettes 1 peuvent se déplacer sous l'action de la couronne 25. L'élément torique 38 comporte un certain nombre d'ouvertures ménagées au moins dans sa paroi extérieure, et disposées en regard des postes nécessitant une introduction et/ou un retrait des cuvettes 1. Un actionneur linéaire tel qu'un vérin, monté sur l'élément torique 38 ou sur le support du poste considéré, permet de déplacer une cuvette 1 entre la couronne 25 et le poste concerné.

Le fonctionnement du dispositif d'analyse 22 est le suivant.

Un opérateur indique sur un système de commande de type ordinateur connecté au dispositif d'analyse 22 les mesures et tests à effectuer surun échantillon de fluide biologique prélevé. Un logiciel embarqué permet de gérer les déplacements d'un automate en vue de réaliser plusieurs analyses, séquentiellement mais en parallèle. L'opérateur a préalablement chargé les réactifs en les identifiant par exemple à l'aide d'un lecteur de code à barres.

Le magasin d'alimentation 27 introduit le nombre nécessaire de cuvettes 1 vides dans des cavités 26 de la couronne 25. Les cuvettes 1, dans lesquelles a été introduit le fluide biologique et les éventuels réactifs appropriés, sont amenées par la rotation de la couronne 25 en regard des postes correspondant aux tests ou mesures à effectuer. Selon les cas, la cuvette 1 est déchargée vers le poste pour que l'analyse ait lieu (et peut y rester le temps nécessaire sans bloquer le mouvement de la couronne 25 qui assure simultanément le transfert ou le maintien en position d'autres cuvettes à d'autres postes de mesure et d'analyse), ou l'analyse est conduite alors que la cuvette 1 est toujours disposée dans une cavité 26. Ainsi, les analyses nécessitant un temps relativement important peuvent être effectuées en temps masqué, à un poste précis, alors que d'autres analyses instantanées sont effectuées à d'autres postes. Une fois l'analyse terminée, les cuvettes 1 sont replacées sur la couronne 25, le cas échéant, qui les amène vers le poste d'évacuation 34.

La couronne 25 est donc un dispositif permettant à la fois de déplacer les cuvettes 1 mais aussi d'effectuer des tests de biochimie, généralement rapides. La couronne 25 possède un nombre de cavités 26 suffisant pour pouvoir gérer à la fois tous les transferts de cuvettes et les incubations des réactions de toutes les disciplines afin d'obtenir les cadences de traitement des échantillons souhaitées.

Concernant la détermination du temps de modification de l'état physique du fluide biologique contenu dans la cuvette 1, en particulier du temps de coagulation du sang, le procédé est le suivant.

Lorsqu'une telle détermination doit être effectuée, et uniquement dans ce cas, la couronne 25 amène tout d'abord une cuvette 1 au niveau du poste de distribution 36 de billes ferromagnétiques 11. Une bille 11 est alors introduite dans la cuvette 1. La cuvette 1 est ensuite déplacée vers le poste 37, où la mesure est effectuée.

Le poste 37 comprend des moyens 39 pour exciter magnétiquement et impulsionnellement la bille 11, et détecter les amplitudes des oscillations de la bille 11. Ainsi, de façon connue, la bille 11 est entraînée dans un mouvement périodique sur le chemin de roulement 8 sous l'effet d'un champ magnétique extérieur, à une fréquence proche de la fréquence propre de la bille (de l'ordre de 2,5 à 5 Hz). Le système se comporte comme un micro viscosimètre. En effet lorsque la viscosité du milieu ne change pas, l'amplitude de la bille 11 est constante. Quand la viscosité augmente, du fait que la fréquence d'excitation est proche de la fréquence propre, l'amplitude décroît très rapidement et permet de détecter avec précision par la mesure de l'amplitude de la bille, le début des réactions de coagulation ou bien des caillot très peu denses. En particulier, ce système permet de mesurer des taux de fibrinogène très faibles et avec une bonne précision.

Ainsi, l'invention apporte une amélioration déterminante à la technique antérieure, en fournissant une cuvette unitaire et un dispositif d'analyse qui sont polyvalents, de conception et de mise en oeuvre simples, et qui permettent une réduction des coûts de fonctionnement.

Il va de soi que l'invention n'est pas limitée au mode de réalisation décrit ci-dessus à titre d'exemple mais qu'elle en embrasse au contraire toutes les variantes de réalisation. En particulier, on notera que la languette et l'encoche pourraient être disposées sur des bords transversaux de la cuvette, et les débords sur des bords longitudinaux de la cuvette.

## Revendications

1. Cuvette unitaire apte à contenir un fluide biologique pour l'analyse de celui-ci, comprenant sensiblement en son fond (5) des moyens définissant un chemin de roulement (8) curviligne dont la concavité est dirigée vers le haut, ledit chemin présentant son point le plus bas sensiblement en son centre et étant agencé pour guider le mouvement oscillant d'une bille (11) insérée dans la cuvette (1), **caractérisée en ce qu'**elle comporte des moyens d'accrochage (12, 15) dans une première direction (D1) à au moins une autre cuvette (1) unitaire et des moyens d'accrochage (17, 18) dans une seconde direction (D2), sensiblement perpendiculaire à la première, à au moins une autre cuvette (1) unitaire.

2. Cuvette selon la revendication 1, **caractérisée en ce que** les moyens d'accrochage de la cuvette (1) selon la première direction (D1) comportent au moins une languette (12) dirigée vers le bas ménagée sur l'un des bords (13) de la partie supérieure de la cuvette (1).

3. Cuvette selon la revendication 2, **caractérisée en ce que** la cuvette (1) comporte une encoche (15) ménagée sur le bord (14) de la partie supérieure de la cuvette opposé au bord (13) comportant la languette (12), la languette (12) d'une cuvette (1) étant destinée à coopérer avec l'encoche (15) d'une cuvette adjacente selon la première direction (D1).

4. Cuvette selon l'une des revendications 2 à 3, **caractérisée en ce que** les moyens d'accrochage de la cuvette (1) selon la seconde direction comportent deux débords, dont l'un (17) forme un crochet ouvert vers le haut et l'autre (18) forme un crochet ouvert vers le bas, le crochet ouvert vers le haut de l'un des débords (17) d'une cuvette (1) étant susceptible de venir en prise avec le crochet ouvert vers le bas du débord (18) d'une cuvette (1) adjacente, les débords (17, 18) étant ménagés sur l'embase (16) de la cuvette (1), le long de deux bords opposés et orthogonaux au bord supérieur (13) de la cuvette (1) comportant la languette (12).

5. Cuvette selon l'une des revendications 1 à 4, **caractérisée en ce que** la cuvette (1) et les moyens définissant un chemin de roulement (8)
sont réalisés d'une seule pièce par moulage d'une matière plastique transparente compatible avec les différentes réactions d'analyse du fluide biologique que la cuvette (1) est apte à contenir.

6. Cuvette selon l'une des revendications 1 à 5, **caractérisée en ce qu'**elle comprend une partie inférieure (2) de forme sensiblement parallélépipédique allongée dans le sens du chemin de roulement (8), prolongée par une partie supérieure (6) en forme d'entonnoir s'évasant à l'opposé du fond (5).

7. Cuvette selon l'une des revendications 1 à 6, **caractérisée en ce que** le chemin de roulement (8) présente la forme d'une portion de cylindre de rayon compris entre 8 et 10 mm, pour une bille (11) de diamètre compris entre 1 et 2,5 mm.

8. Cuvette selon l'une des revendications 1 à 7, **caractérisée en ce que** les moyens définissant un chemin de roulement (8) comprennent deux rails latéraux (9, 10) ménagés en partie inférieure de la cuvette (1).

9. Dispositif automatique d'analyse in vitro, **caractérisé en ce qu'**il comprend :
- un magasin d'alimentation (27) dans lequel est stocké un ensemble de cuvettes (1) unitaires selon l'une des revendications précédentes ;
- un rotor (23) d'axe (24) sensiblement vertical, associé à des moyens d'entraînement en rotation et portant une couronne horizontale dentée (25) délimitant des cavités (26) ouvertes radialement vers l'extérieur aptes à recevoir les cuvettes (1) unitaires, notamment depuis le magasin d'alimentation (27) ;
- un dispositif d'introduction de fluide biologique à analyser dans au moins une cuvette (1) ;
- des postes (29 - 37) disposés autour de la couronne (25), pour la réalisation de mesures et/ou d'analyses du fluide contenu dans une cuvette (1), au moins l'un desdits postes comportant des moyens de déchargement/chargement des cuvettes (1) pour la réalisation d'une mesure et/ou d'une analyse au niveau du poste, en dehors de la couronne ;
- un automate piloté par un logiciel embarqué gérant les séquences du processus souhaité pour chaque cuvette (1).

10. Dispositif selon la revendication 9, lorsqu'elle dépend de la revendication 2, **caractérisé en ce que** la largeur d'une cavité (26) de la couronne dentée (25) est sensiblement égale à la largeur de la cuvette (1) à sa partie supérieure portant la languette (12).

11. Dispositif selon la revendication 9 ou 10, **caractérisé en ce qu'**il comporte un poste de distribution (36) de billes (11) ferromagnétiques disposé à proximité de la couronne (25) pour pouvoir insérer une bille dans une cuvette (1) placée dans une cavité (26), et un poste (37) de détermination du temps de modification de l'état physique du fluide biologique contenu dans ladite cuvette (1) mettant en oeuvre un mouvement oscillant de la bille (11) sur le chemin de roulement (8) ménagé dans la cuvette (1).

## Claims

1. A cuvette unit capable of containing a biological fluid for the analysis thereof, substantially, comprising in its bottom (5) means defining a curvilinear rolling track (8), the concavity of which is directed upwards, said track having its lowest point substantially in its centre and being laid out so as to guide the oscillating motion of a ball (11) inserted into the cuvette (1), **characterized in that** it includes means (12, 15) in a first direction (D1) for attachment to at least one other cuvette unit (1), and means (17, 18) in a second direction (D2), substantially perpendicular to the first, for attachment to at least one other cuvette unit (1).

2. The cuvette according to claim 1, **characterized in that** the attachment means of the cuvette (1) along the first direction (D1) include at least one tab (12) directed downwards, made on one of the edges (13) of the upper portion of the cuvette (1).

3. The cuvette according to claim 2, **characterized in that** the cuvette (1) includes a notch (15) made on the edge (14) of the upper portion of the cuvette opposite to the edge (13) including the tab (12), the tab (12) of a cuvette (1) being intended to cooperate with the notch (15) of an adjacent cuvette along the first direction (D1).

4. The cuvette according to one of claims 2 to 3, **characterized in that** the attachment means of the cuvette (1) along the second direction include two overhanging edges, one (17) of which forms an upwardly open hook and the other one (18) forms a downwardly open hook, the upwardly open hook of one of the overhanging edges (17) of a cuvette (1) being capable of engaging with the downwardly open hook (18) of an adjacent cuvette (1), the overhanging edges (17, 18) being made on the base (16) of the cuvette (1), along two opposite edges orthogonal to the upper edge (13) of the cuvette (1) including the tab (12).

5. The cuvette according to one of claims 1 to 4, **characterized in that** the cuvette (1) and the means defining a rolling track (8) are made in a single piece by molding a transparent plastic material compatible with the different reactions for analyzing the biological fluid which the cuvette (1) is able to contain.

6. The cuvette according to one of claims 1 to 5, **characterized in that** it comprises a lower portion (2) with a substantially parallelepipedal shape elongated in the direction of the rolling track (8), extended with a funnel-shaped upper portion (6), flaring opposite to the bottom (5).

7. The cuvette according to one of claims 1 to 6, **characterized in that** the rolling track (8) has the shape of a cylinder portion with a radius comprised between 8 and 10 mm, for a ball (11) of a diameter comprised between 1 and 2.5 mm.

8. The cuvette according to one of claims 1 to 7, **characterized in that** the means defining a rolling track (8) comprises two side rails (9, 10) made in the lower portion of the cuvette (1).

9. An automatic *in vitro* analysis device, **characterized in that** it comprises:
- a supply magazine (27) in which a set of cuvette units (1) according to one of the preceding claims is stored;
- a rotor (23) with a substantially vertical axis (24), associated with the rotary drive means and bearing a horizontal toothed crown (25) delimiting radially outwardly open cavities (26), capable of receiving cuvette units (1), notably from the supply magazine (27);
- a device for introducing biological fluid to be analyzed in at least one cuvette (1);
- stations (29-37), positioned around the crown (25), for conducting measurements and/or analyses of the fluid contained in a cuvette (1), at least one of said stations including means for unloading/loading the cuvettes (1) for conducting a measurement and/or an analysis at the station, outside the crown;
- a robot driven by an on-board software package managing the sequences of the desired process for each cuvette (1).

10. The device according to claim 9, when it depends on claim 2, **characterized in that** the width of a cavity (26) of the toothed crown (25) is substantially equal to the width of the cuvette (1) at its upper portion bearing the tab (12).

11. The device according to claim 9 or 10, **characterized in that** it includes a station (36) for distributing ferromagnetic balls (11), positioned in proximity to the crown (25) in order to be able to insert a ball into a cuvette (1) placed in a cavity (26), and a station (37) for determining the time for modifying the physical state of the biological fluid contained in said cuvette (1) applying an oscillating movement of the ball (11) on the rolling track (8) made in the cuvette (1).

## Patentansprüche

1. Einzelküvette, die imstande ist, ein biologisches Fluid zur Analyse derselben zu enthalten, die etwa auf ihrem Boden (5) Mittel umfasst, die einen gekrümmten Rollweg (8) definieren, dessen Konkavität nach oben gerichtet ist, wobei der Weg seinen niedrigsten Punkt etwa in seinem Zentrum aufweist und ausgebildet ist, um die oszillierende Bewegung einer in die Küvette (1) eingeführten Kugel (11) zu führen, **dadurch gekennzeichnet, dass** sie Kopplungsmittel (12, 15) in eine erste Richtung (D1) mit mindestens einer anderen Einzelküvette (1) und des Kopplungsmittel (17, 18) in eine zweite Richtung (D2) etwa senkrecht zur ersten mit mindestens einer anderen Einzelküvette (1) aufweist.

2. Küvette nach Anspruch 1, **dadurch gekennzeichnet, dass** die Kopplungsmittel der Küvette (1) gemäß der ersten Richtung (D1) mindestens eine auf einem der Ränder (13) des oberen Abschnitts der Küvette (1) ausgebildete, nach unten gerichtete Zunge (12) aufweisen.

3. Küvette nach Anspruch 2, **dadurch gekennzeichnet, dass** die Küvette (1) eine Kerbe (15) aufweist, die auf dem Rand (14) des oberen Abschnitts der Küvette gegenüber dem Rand (13) eingearbeitet ist, der die Zunge (12) aufweist, wobei die Zunge (12) einer Küvette (1) dazu bestimmt ist, mit der Kerbe (15) einer benachbarten Küvette gemäß der ersten Richtung (D1) zusammenzuarbeiten.

4. Küvette nach einem der Ansprüche 2 bis 3, **dadurch gekennzeichnet, dass** die Kopplungsmittel der Küvette (1) gemäß der zweiten Richtung zwei Überstände aufweisen, von denen einer (17) einen nach oben offenen Haken bildet und der andere (18) einen nach unten offenen Haken bildet, wobei der nach oben offene Haken einer der Überstände (17) einer Küvette (1) imstande ist, mit dem nach unten offenen Haken des Überstands (18) einer benachbarten Küvette (1) in Eingriff zu kommen, wobei die Überstände (17, 18) auf der Basis (16) der Küvette (1) entlang zweier gegenüberliegender Ränder und orthogonal zum oberen Rand (13) der Küvette (1), der die Zunge (12) aufweist, ausgebildet sind.

5. Küvette nach einem der Ansprüche 1 bis 4, **dadurch gekennzeichnet, dass** die Küvette (1) und die einen Rollweg (8) definierenden Mittel aus einem einzigen Teil durch Formen eines durchsichtigen Kunststoffs hergestellt sind, der mit den verschiedenen Analysereaktionen des biologischen Fluids, das die Küvette (1) zu enthalten imstande ist, kompatibel ist.

6. Küvette nach einem der Ansprüche 1 bis 5, **dadurch gekennzeichnet, dass** sie einen unteren, etwa parallelepipedischen, sich in Richtung des Rollwegs (8) erstreckenden Abschnitt (2) umfasst, der von einem oberen trichterförmigen Abschnitt (6) verlängert wird, der sich entgegengesetzt zum Boden (5) erweitert.

7. Küvette nach einem der Ansprüche 1 bis 6, **dadurch gekennzeichnet, dass** der Rollweg (8) die Form eines Zylinderabschnitts mit einem Radius zwischen 8 und 10 mm inklusive für eine Kugel (11) mit einem Durchmesser zwischen 1 und 2,5 mm inklusive aufweist.

8. Küvette nach einem der Ansprüche 1 bis 7, **dadurch gekennzeichnet, dass** die einen Rollweg (8) definierenden Mittel zwei seitliche Schienen (9, 10) umfassen, die im unteren Abschnitt der Küvette (1) eingearbeitet sind.

9. Automatische Vorrichtung zur in vitro-Analyse, **dadurch gekennzeichnet, dass** sie umfasst:
- ein Versorgungsmagazin (27), in dem eine Gruppe von Einzelküvetten (1) nach einem der vorangehenden Ansprüche gelagert ist,
- einen Rotor (23) mit einer etwa vertikalen Achse (24), die mit Rotations-Antriebsmitteln verbunden ist und der einen horizontalen Zahnkranz (25) trägt, der radial nach außen offene Hohlstellen (26) begrenzt, die imstande sind, die Einzelküvetten (1) aufzunehmen, vor allem vom Versorgungsmagazin (27),
- eine Vorrichtung zum Einführen zu analysierenden biologischen Fluids in mindestens eine Küvette (1),
- um den Kranz (25) angeordnete Stationen (29 - 37) für die Durchführung von Messungen und/oder Analysen des in einer Küvette (1) enthaltenen Fluids, wobei mindestens eine der Stationen zur Durchführung einer Messung und/oder einer Analyse auf Ebene der Station außerhalb des Kranzes Mittel zum Entladen/Beladen der Küvetten (1) umfasst,
- einen Automaten, der von einer eingebetteten Software gesteuert wird, die die Sequenzen des für jede Küvette (1) gewünschten Verfahrens verwaltet.

10. Vorrichtung nach Anspruch 9, wenn er von Anspruch 2 abhängt, **dadurch gekennzeichnet, dass** die Breite einer Hohlstelle (26) des Zahnkranzes (25) etwa der Breite der Küvette (1) in ihrem die Zunge (12) tragenden oberen Abschnitt entspricht.

11. Vorrichtung nach Anspruch 9 oder 10, **dadurch gekennzeichnet, dass** sie eine Spenderstation (36) ferromagnetischer Kugeln (11) aufweist, die in der Nähe des Kranzes (25) angeordnet ist, um eine Kugel in eine Küvette (1) einführen zu können, die in einer Hohlstelle (26) platziert ist, und eine Station (37) zur Bestimmung der Zeit der Änderung des physikalischen Zustands des in der Küvette (1) enthaltenen biologischen Fluids durch Durchführung einer oszillierenden Bewegung der Kugel (11) auf dem in der Küvette (1) eingearbeiteten Rollweg (8).
